# FASCICULE DE BREVET EUROPEEN

(11) **EP 2 997 714 B1**
(45) Date de publication et mention de la délivrance du brevet: **10.01.2018**
(21) Numéro de dépôt: 14729968.9
(22) Date de dépôt: 16.05.2014
(51) Int. Cl.: H04L 29/08, H04M 3/42, H04M 3/533

(54) **PROCÉDÉ DE COMMUNICATION EN TEMPS RÉEL ENTRE NAVIGATEURS WEB**
VERFAHREN ZUR ECHTZEITKOMMUNIKATION ZWISCHEN WEBBROWSERN
METHOD FOR REAL-TIME COMMUNICATION BETWEEN WEB BROWSERS

(30) Priorité: 17.05.2013 FR 1354444
(43) Date de publication de la demande: 23.03.2016
(73) Titulaire: Orange, 75015 Paris (FR)
(72) Inventeur: LABRANCHE, Miguel, F-94380 Bonneuil Sur Marne (FR); DE SNOECK, Xavier, F-75010 Paris (FR)
(86) Numéro de dépôt international: PCT/FR2014/051145
(87) Numéro de publication internationale: WO 2014/184504

(56) Documents cités:
- US-A1- 2006 253 597
- US-A1- 2009 164 639
- US-A1- 2010 174 789
- US-A1- 2011 185 286

## Description

L'invention a trait de manière générale à la communication en temps réel entre navigateurs web sur un réseau de communication tel que l'Internet.

Plus précisément, l'invention concerne la technologie de communication en temps réel entre navigateurs web actuellement en cours de normalisation, conjointement par le *World Wide Web Consortium* (W3C) et l'*Internet Engineering Task Force* (IETF), et désignée par WebRTC (*Web Real-Time Communication*) au W3C et RTCWEB à l'IETF.

Ces dernières années ont vu émerger une nouvelle plateforme pour le développement de services basés sur des "applications web" - c'est-à-dire des applications téléchargées par un navigateur en consultant une page web - : le navigateur web. En effet, dès lors que la plateforme du navigateur dispose des interfaces nécessaires pour opérer avec ces applications web, il est possible de délivrer presque n'importe quel type de service via un navigateur.

Traditionnellement, les interfaces précitées sont fournies au navigateur sous la forme de modules d'extension, désignés communément par *plugin* en anglais, et qui doivent être téléchargés puis installés séparément du navigateur.

On citera, par exemple, sur le marché des services web de communication temps réel (RTC) entre navigateurs, les produits connus sous les noms *Skype*™, *Facebook*™ (qui utilise *Skype*) et *Google Hangouts*™ (qui utilise le plugin *Google Talk*™). On peut aussi citer le produit Flash Player™ de la société Adobe.

Tous les produits précités nécessitent des téléchargements, des applications natives ou des modules d'extension (plugins) externes au navigateur. Or, le téléchargement, l'installation et la mise à jour de plugins est complexe, source d'erreurs et de désagrément. Par ailleurs, la conception, le test, la mise à jour, et le déploiement de plugins est complexe et coûteux.

Avec le développement du langage HTML5 (*HyperText Markup Language 5*) de nouvelles perspectives s'ouvrent aux développeurs d'applications avec la possibilité de rendre les interfaces (API - *Application Programming Interface*) avec les applications web, accessibles de façon normalisée au sein du navigateur.

C'est la voie suivie par la l'IETF et le W3C avec la norme RTCWEB/ WebRTC qui vise à fournir deux types de spécifications :
- une spécification de protocoles, effectuée à l'IETF ;
- une spécification d'APIs Javascript, effectuée au W3C.

Les deux spécifications précitées visent à fournir un environnement selon lequel une application Javascript incorporée dans n'importe quelle page web, lue par n'importe quel navigateur compatible, et autorisée de manière appropriée par son utilisateur, est capable d'établir une communication utilisant de l'audio, de la vidéo (et des données auxiliaires), sans que la plateforme du navigateur ne limite les types d'application dans lesquels cette fonctionnalité de communication peut être utilisée.

Selon la norme RTCWEB/WebRTC actuelle, un navigateur web doit implémenter trois interfaces API pour pouvoir recevoir et transmettre des données en mode streaming (parfois appelé "lecture en continu" ou "diffusion en flux" en français), ces APIs sont les suivantes :
- MediaStream : permet au navigateur d'accéder aux flux de données tels que ceux issus de la caméra (web cam) et du microphone du terminal de l'utilisateur ;
- RTCPeerConnection : assure les appels audio ou vidéo, avec des mécanismes de chiffrement et de gestion de bande passante (*bandwidth*) ;
- RTCDataChannel : assure la communication pair-à-pair de données génériques.

Pour obtenir plus d'informations concernant les spécifications RTCWEB/ WebRTC, on pourra consulter en particulier les documents suivants :
- WebRTC 1.0: Real-time Communication Between Browsers - W3C Editor's Draft 22 March 2013 - accessible sur Internet à l'adresse suivante : http://dev.w3.org/2011/webrtc/editor/webrtc.html#rtcpeerconnection-interface
- Overview: Real Time Protocols for Brower-based Applications - draft-ietf-rtcweb-overview-06 - February 20, 2013 - accessible sur Internet à l'adresse suivante : http://datatracker.ietf.org/doc/draft-ietf-rtcweb-overview/

Actuellement, des éditeurs de navigateur web proposent des versions expérimentales de ce nouveau service entre navigateurs, par exemple Google avec le navigateur Chrome™, Mozilla avec le navigateur Firefox™, Ericsson avec le navigateur appelé Bowser™ développé pour téléphone mobile.

Dans les versions proposées à ce jour, qui sont conformes aux spécifications RTCWEB/ WebRTC, lorsqu'un premier utilisateur souhaite établir une communication audio ou vidéo, depuis son navigateur web compatible WebRTC, avec un second utilisateur sur le réseau Internet, il commence par se connecter via son navigateur à un serveur d'application fournissant le service de communication WebRTC. Après une opération d'authentification éventuelle, le navigateur charge, via une page web, l'application web (application Javascript) conforme aux spécifications RTCWEB et adaptée à interagir avec les APIs susmentionnées (conformes aux spécifications WebRTC) qui sont incorporées nativement dans le navigateur.

Par exemple le document de l'art antérieure US2011/0185286 décrit une interface de navigateur web permettant de visualisé des communications a temps réel dans un environnement de communication sans avoir besoin d'installer un logiciel spécialisé. Ensuite, le premier utilisateur choisit, via la page web de connexion au serveur d'application, un identifiant du second utilisateur, puis entre une commande - par exemple par un clic sur un bouton d'action affiché dans la page web ouverte dans le navigateur - pour déclencher l'appel audio ou vidéo vers le second utilisateur. Typiquement, la page web ouverte dans le navigateur affiche alors un message indiquant que la connexion est en cours d'établissement.

Si le second utilisateur, destinataire de l'appel, est également connecté au même service de communication WebRTC fourni par le serveur d'application, alors il pourra accepter l'appel audio ou vidéo issu du premier utilisateur, et la communication pourra alors être établie.

Au contraire, dans le cas où le navigateur du terminal du second utilisateur n'est pas actif, ou bien dans le cas où la page web du service WebRTC n'est pas ouverte dans le navigateur du second utilisateur, ou encore si le terminal du second utilisateur n'est pas connecté au réseau, alors la communication audio ou vidéo entre le premier et le second utilisateur ne pourra pas s'établir, et cela sans que le premier utilisateur ne soit informé de la raison de l'échec de la communication.

La présente invention a pour but notamment de remédier à la situation exposée ci-dessus. A cet effet, l'invention concerne selon un premier aspect, un procédé de communication en temps réel selon une technologie de type WebRTC, entre navigateurs web sur un réseau de communication de type Internet.

On entend par technologie "de type WebRTC", une technologie de communication temps réel entre navigateurs web reposant sur les mêmes principes que celle définie par les spécifications RTCWEB/ WebRTC, c'est-à-dire reposant sur des navigateurs web standards, sans qu'il soit nécessaire d'adjoindre à ces navigateurs des modules d'extension (*plugins*).

Selon l'invention le procédé précité comprend :
- le chargement préalable par un premier navigateur web d'un premier terminal associé à un premier utilisateur, d'une application web fournie par un serveur d'application, l'application web fournissant des fonctionnalités de communication temps réel entre navigateurs web ;
- l'envoi par le premier navigateur, via l'application web, à destination du serveur d'application, d'une demande d'établissement d'appel incluant un identifiant d'un utilisateur destinataire de l'appel, dit second utilisateur ;

Conformément à l'invention ce procédé comporte en outre les étapes suivantes :
- détermination d'un état de disponibilité du second utilisateur pour répondre à la demande d'établissement d'appel ;
- redirection automatique vers une adresse web d'un service de messagerie associé au second utilisateur, lorsque le second utilisateur est dans l'état indisponible.

Ainsi, selon l'invention, lorsque le second utilisateur est déterminé comme étant indisponible pour répondre à l'appel le navigateur du premier utilisateur est redirigé automatiquement vers une adresse web (URL - *Uniform Resource Locator*) d'un service de messagerie, ce qui permet au premier utilisateur de ne pas rester sans information relative à l'échec de la communication.

Ainsi, selon l'invention, si la demande d'établissement d'appel n'aboutit pas au bout d'un d'une durée déterminée dans le premier navigateur, mesurée par une minuterie (*timer* en anglais) par exemple, le navigateur du premier utilisateur est redirigé automatiquement vers une adresse web (URL - *Uniform Resource Locator*) d'un service de messagerie, ce qui permet au premier utilisateur de ne pas rester sans information relative à l'échec de la communication.

Selon un mode de réalisation de l'invention, l'étape de détermination d'un état de disponibilité du second utilisateur, inclut l'évaluation d'un temps écoulé depuis l'envoi de la demande d'établissement d'appel, et l'état de disponibilité du second utilisateur est alors déterminé comme étant indisponible, lorsque le temps écoulé atteint une durée déterminée.

Selon un autre mode de réalisation qui peut être combiné avec le précédent, l'étape de détermination d'un état de disponibilité du second utilisateur, inclut l'obtention d'une information de présence du second utilisateur pour le service de communication temps réel entre navigateurs, et si cette information de présence indique que le second utilisateur est absent pour le service, alors l'état de disponibilité du second utilisateur est déterminé comme étant indisponible.

En pratique, selon un exemple de réalisation, l'obtention d'une information de présence comprend la consultation d'une table de présence d'utilisateurs pour le service de communication temps réel entre navigateurs web.

Ainsi, dans le cas où le service de communication WebRTC assure la gestion d'un état de présence des abonnés pour le service, si le second utilisateur est déterminé comme étant absent pour le service de communication au moment où la demande d'appel est transmise par le premier utilisateur, alors le navigateur du premier navigateur est immédiatement redirigé vers l'adresse web du service de messagerie.

En particulier, selon une caractéristique de l'invention, suite à la redirection vers le service de messagerie, le premier navigateur affiche une page web restituant un message du second utilisateur.

En pratique, le message restitué du second utilisateur peut être un message de type audio, vidéo, et/ou textuel.

Ainsi, suite à la redirection vers le service de messagerie, le premier utilisateur sera informé, grâce au message du second utilisateur, du fait que ce dernier n'est pas joignable et éventuellement sur les raisons pour lesquelles il n'est pas joignable.

De plus, selon une caractéristique additionnelle de l'invention, la page web affichée dans le premier navigateur, et qui restitue le message du second utilisateur, offre en outre au premier utilisateur une fonctionnalité de dépôt d'un message destiné au second utilisateur.

Ce message du second utilisateur pouvant être, selon différents modes de réalisation, un message de type audio, vidéo, et/ou textuel.

Ainsi, un tel service de messagerie selon l'invention pourra rendre dans le cadre de la communication WebRTC entre navigateurs, non seulement un service similaire à celui fourni dans le cadre de la téléphonie classique (mobile ou fixe), mais également avec davantage de possibilités concernant les types de messages pouvant être déposés.

Selon une caractéristique particulière de l'invention, suite au dépôt d'un message par le premier utilisateur, le message déposé est transmis par le premier navigateur à un serveur de messagerie, le serveur de messagerie transmettant ensuite à destination d'un terminal associé au second utilisateur, une notification indicative de la réception du message déposé par le premier utilisateur.

Selon une mise en oeuvre particulière de l'invention, la notification précitée comporte est un message de type SMS ou MMS transmis à un identifiant de téléphonie mobile associé au second utilisateur. On peut également prévoir que la notification comporte un message électronique transmis à une adresse de courrier électronique du second utilisateur. La notification peut aussi, selon le mode de réalisation considéré, consister en l'envoi simultané de plusieurs messages de types différents correspondant à des terminaux de communication (PC, téléphone mobile, ...) distincts, utilisés par le second utilisateur.

On peut également envisager d'utiliser, en guise de notification, un indicateur de message en attente, de type MWI (*Message-Waiting Indicator*).

En pratique, la notification précitée peut inclure selon le mode de réalisation choisi, tout ou partie des informations suivantes :
- l'identité de l'appelant ;
- le type de message déposé (audio, vidéo, textuel, ...) ;
- la durée de message ;
- le nombre de caractères utilisés par le message (message textuel) ;
- la nature urgente ou non urgente du message.

De cette façon, le second utilisateur, même s'il n'est pas connecté à Internet ou bien s'il ne se connecte pas au serveur de messagerie selon l'invention, pourra être averti de l'arrivée d'un message issu d'un utilisateur ayant tenté de le joindre par communication WebRTC.

Selon un premier mode de réalisation du procédé de communication selon l'invention, les étapes de détermination d'un temps écoulé depuis l'envoi d'une demande d'établissement d'appel, et de redirection automatique vers une messagerie vocale, lorsque le temps écoulé atteint une durée déterminée, sont mises en oeuvre par l'application web chargée dans le premier navigateur. Dans ce mode de réalisation, l'application web est typiquement une application Javascript incorporée dans le code HTML de la page Web fourni par le serveur d'application offrant le service de communication temps réel entre navigateurs.

Ce premier mode de réalisation est particulièrement adapté au cas où le fournisseur du service de communication temps réel entre navigateurs, fournit également le service de messagerie WebRTC associé, ou bien au cas où le fournisseur du service de communication temps réel entre navigateurs, fournit seulement la fonctionnalité de redirection vers un serveur de messagerie WebRTC géré par un fournisseur de services tiers.

Selon un second mode de réalisation, les étapes de détermination d'un temps écoulé depuis l'envoi d'une demande d'établissement d'appel, et de redirection automatique vers une messagerie vocale, sont mises en oeuvre par une interface de programmation (API) incorporée nativement dans le premier navigateur.

Ce second mode de réalisation est adapté au cas où le fournisseur du service de communication temps réel entre navigateurs et le fournisseur du service de messagerie associé, sont des entités distinctes. L'API implémentant le service de messagerie dans le navigateur permet alors à l'utilisateur du navigateur de paramétrer l'adresse web (URL) de la messagerie à ouvrir par le navigateur, en cas de non réponse d'un navigateur destinataire, lors d'une tentative d'établissement d'appel.

Corrélativement, selon un second aspect, l'invention a par conséquent pour objet une application web fournissant des fonctionnalités de communication temps réel entre navigateurs web. Cette application web selon l'invention, comprend des instructions de programme dont l'exécution par un processeur, déclenchée par un navigateur web d'un terminal de communication, provoque la mise en oeuvre des étapes de détermination d'un temps écoulé depuis l'envoi d'une demande d'établissement d'appel, et de redirection vers une messagerie vocale lorsque le temps écoulé atteint une durée déterminée, selon le procédé de communication selon l'invention tel que succinctement exposé plus haut.

Une telle application web est par conséquent particulièrement adaptée au premier mode de réalisation évoqué plus haut.

Selon un troisième aspect, l'invention concerne également un navigateur web comportant une interface de programmation (API) incluant un code de programme d'ordinateur, dont l'exécution par un processeur d'un terminal de communication dans lequel le navigateur web est installé, provoque la mise en oeuvre des étapes de détermination d'un temps écoulé depuis l'envoi d'une demande d'établissement d'appel, et de redirection vers une messagerie vocale lorsque le temps écoulé atteint une durée déterminée, conformes au procédé de communication selon l'invention tel que succinctement exposé plus haut.

Un tel navigateur est par conséquent particulièrement adapté au second mode de réalisation évoqué plus haut.

Enfin, selon respectivement un quatrième et un cinquième aspect, la présente invention concerne aussi :
- un serveur de messagerie accessible par un navigateur web, via une adresse web, ce serveur de messagerie fournissant un service de messagerie pour la mise en oeuvre d'un procédé de communication selon l'invention tel qu'exposé plus haut ;
- un serveur d'application fournissant un service de communication temps réel entre navigateurs web, ce serveur d'application comprenant un serveur web hébergeant au moins une page web incluant une application web conforme au second aspect de l'invention, évoqué plus haut.

Selon un mode particulier de réalisation de l'invention, le serveur de messagerie peut être inclus dans le serveur d'application selon l'invention.

D'autres caractéristiques et avantages de la présente invention ressortiront de la description détaillée qui suit, laquelle fait référence aux dessins annexés dans lesquels :
- la figure 1 illustre un environnement réseau dans lequel la présente invention peut être mise en oeuvre ;
- la figure 2 représente sous forme d'organigramme les principales étapes du procédé de communication selon l'invention ;
- la figure 3 est un diagramme représentant les échanges entre les différentes entités représentées à la figure 1 selon un exemple de mise en oeuvre d'un procédé de communication selon l'invention ;
- la figure 4 représente une boîte de dialogue ouverte dans un navigateur, permettant de paramétrer l'adresse de renvoi vers une messagerie et le délai de temporisation avant renvoi, selon un mode de réalisation de l'invention ;
- la figure 5 représente un exemple d'interface graphique obtenue par un navigateur d'un utilisateur après connexion à un serveur de messagerie WebRTC selon l'invention, permettant à l'utilisateur de consulter les messages qu'il a reçus ;
- la figure 6 représente un exemple d'interface graphique obtenue par un navigateur d'un utilisateur après connexion à un serveur de messagerie WebRTC selon l'invention, afin de permettre à l'utilisateur de configurer sa messagerie personnelle ; et
- la figure 7 représente un exemple d'interface graphique obtenue par un navigateur d'un premier utilisateur après redirection vers un serveur de messagerie WebRTC selon l'invention, suite à l'absence de réponse à un appel à destination d'un second utilisateur.

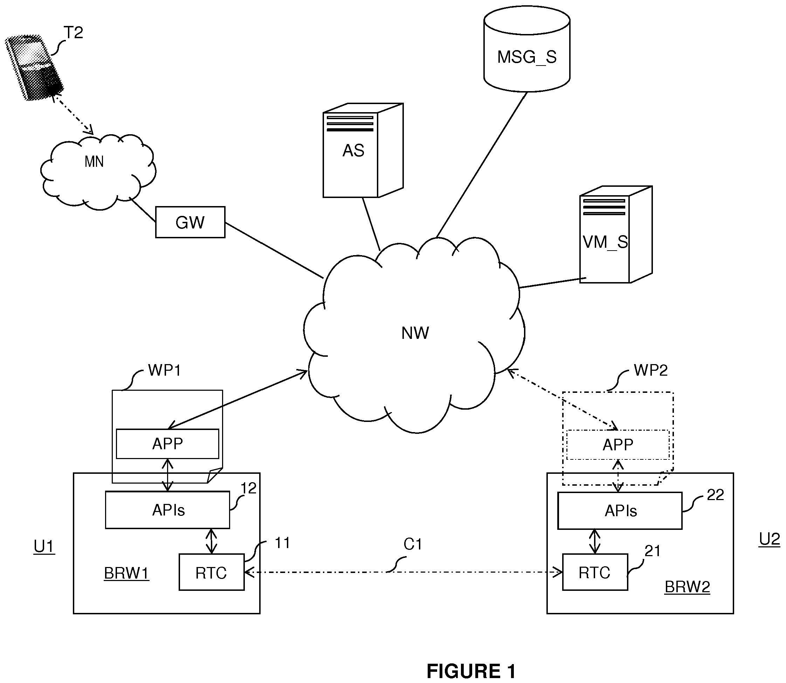

La **figure 1** illustre un environnement réseau dans lequel la présente invention peut être mise en oeuvre.

L'environnement représenté comprend un premier navigateur web BRW1 d'un premier terminal d'utilisateur (utilisateur U1), un second navigateur BRW2 d'un second terminal d'utilisateur (utilisateur U2). Les terminaux d'utilisateurs précités peuvent être dans un état connecté ou non connecté à un réseau de communication NW qui est un réseau de type Internet, c'est-à-dire un réseau basé sur les technologies de communication mises en oeuvre dans le réseau Internet, en particulier le réseau NW peut être aussi un réseau d'entreprise communément appelé *intranet.*

Les navigateurs BRW1 et BRW2 sont des navigateurs compatibles WebRTC/RTCWEB, et à ce titre, disposent respectivement d'un ensemble 12, 22 d'interfaces API conformes aux spécifications WebRTC, et d'un module fonctionnel RTC 11, 21 conforme aux spécifications RTCWEB. Les ensembles APIs 12 et 22 sont aptes respectivement à interagir avec une application Javascript APP incorporée dans des pages web WP1 et WP2 téléchargées respectivement par les navigateurs BRW1 et BRW2 à une adresse web de ressources hébergées par un serveur d'application AS sur le réseau NW.

L'application APP fournit conformément aux spécifications WebRTC/RTCWEB, des fonctionnalités de communication RTC notamment relatives à l'accès au service de communication temps réel WebRTC fourni par le serveur AS, et à la signalisation permettant d'établir une telle communication entre navigateurs.

Ainsi, dans l'exemple illustré à la figure 1, si les deux navigateurs BRW1 et BRW2 ont téléchargé chacun la page web (WP1 et WP2) contenant l'application APP du service WebRTC alors ils peuvent établir une communication temps réel de pair à pair, C1, notamment de type voix ou vidéo.

En revanche, si le navigateur BRW1 tente d'établir un appel avec le terminal dans lequel le navigateur BRW2 est installé et que ce dernier est fermé ou n'est pas connecté au serveur AS et n'a pas ouvert la page web WP2 du service, ou encore si le terminal correspondant n'est pas connecté au réseau ou si l'utilisateur (U2) du terminal ne répond simplement pas à l'appel, alors la communication C1 ne peut s'établir entre les deux navigateurs BRW1 et BRW2 (d'où la représentation en pointillé de la page WP2 et de la double-flèche C1).

Toujours sur la figure 1, sont également représentés un serveur VM_S de messagerie WebRTC, selon l'invention, associé à un serveur MSG_S de stockage de messages - dont le rôle respectif sera expliqué plus en détail dans la suite de l'exposé -, ainsi qu'un terminal mobile T2 associé à l'utilisateur (U2) du second navigateur, et connecté à un réseau de téléphonie mobile MN de seconde, troisième ou quatrième génération (2G, 3G, 4G) lui-même connecté à une passerelle GW permettant de relier le réseau mobile MN au réseau NW.

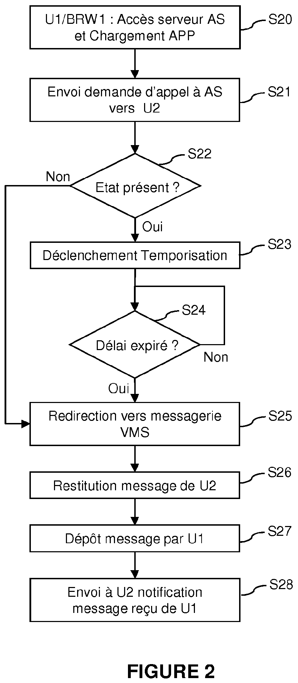

En relation avec la **figure 2** qui représente sous forme d'organigramme les principales étapes d'un procédé de communication selon l'invention, mis en oeuvre dans un environnement tel qu'illustré à la figure 1.

Lors de l'étape S20, le navigateur BRW1 de l'utilisateur U1 accède à une adresse web d'un service WebRTC fourni par le serveur d'application AS. Après une éventuelle phase d'authentification au service, le navigateur charge la page web WP1 contenant l'application APP (Javascript).

A l'étape suivante S21, le navigateur BRW1 via l'API RTCPeerConnection transmet au serveur AS une demande d'établissement d'appel à destination de l'utilisateur U2.

L'envoi de la demande d'établissement d'appel déclenche l'étape S23 de test d'un état de présence du second utilisateur pour le service WebRTC. Ce test est mis en oeuvre par exemple par l'envoi d'une commande à destination d'un serveur de présence dans lequel une table de présence des utilisateurs abonnés au service WebRTC est mise régulièrement à jour. Si le second utilisateur est déterminé comme étant absent (S22, Non) pour le service WebRTC, alors le navigateur BRW1 est redirigé automatiquement (étape S25) vers une adresse web de messagerie WebRTC hébergée par le serveur de messagerie VMS. En revanche, si le second utilisateur est déterminé comme étant présent pour le service WebRTC alors on passe à l'étape S23 de temporisation afin de déterminer le temps écoulé depuis l'envoi de la demande d'établissement d'appel.

Il a noté que dans le mode de réalisation choisi, l'étape (S23) de test d'un état de présence du second utilisateur est mise en oeuvre, mais dans le cas où une telle information de présence ne peut être obtenue alors l'étape S23 de déclenchement d'une temporisation est directement exécutée.

A l'étape S24 qui suit, on teste la durée écoulée depuis l'envoi de la demande d'établissement d'appel. Tant que le temps écoulé n'atteint pas une durée déterminée, la mise en attente du navigateur continue (S24, Non). La durée de temporisation peut être, selon le mode de réalisation choisi, fixée au préalable par l'utilisateur U1 du navigateur BRW1 (notamment dans le cas d'une implémentation de l'invention au niveau API) ou bien fixée par le fournisseur du service par l'intermédiaire de l'application Javascript APP.

Durant l'étape S24, si la connexion est établie avec le navigateur destinataire BRW2 alors l'étape S24 est interrompue et la communication (fig. 1, C1) est établie avec le navigateur destinataire BRW2.

Lorsqu'au contraire le temps écoulé atteint la durée de temporisation déterminée, alors la demande d'établissement d'appel est interrompue et le navigateur BRW1 est redirigé automatiquement (étape S25) vers une adresse web de messagerie WebRTC hébergée par le serveur de messagerie VMS.

Une page web provenant de la messagerie est alors affichée par le navigateur BRW1, cette page web restitue alors (étape S26) un message enregistré au préalable par l'utilisateur destinataire de l'appel (utilisateur U2), de la même façon qu'un répondeur de téléphonie classique. Cependant ce message peut être avantageusement enregistré, au choix de l'utilisateur (U2), sous différentes formes : message audio, vidéo ou textuel, ou audio et textuel, ou vidéo et textuel.

La page web de messagerie affichée par le navigateur BRW1 de l'utilisateur U1 offre également à ce dernier la possibilité de déposer un message (étape S27), lequel message peut également déposer sous différentes formes : message audio, vidéo ou textuel ou audio et textuel, ou vidéo et textuel.

Enfin, suite au dépôt d'un message par l'utilisateur U1, le serveur de messagerie VM_S transmet alors, à l'étape S28, à destination d'un terminal de communication (PC, terminal de téléphonie mobile, fixe, ...) associé au second utilisateur (U2), une notification indicative de la réception du message déposé par le premier utilisateur (U1).

Dans le mode de réalisation décrit, le ou les terminaux associés au second utilisateur U2 vers lesquels transmettre une notification de réception d'un message, ainsi que le type de notification, peuvent être configurés au préalable par le second utilisateur comme paramètres associés à sa messagerie, gérée par le serveur de messagerie. Par exemple, l'utilisateur U2 peut configurer qu'une telle notification soit transmise à un identifiant de téléphonie mobile qui lui est propre, ainsi l'utilisateur U2 pourra recevoir cette notification sous forme de message textuel SMS ou MMS (*Short Message Service, Multimedia Messaging Service*) sur son terminal T2.

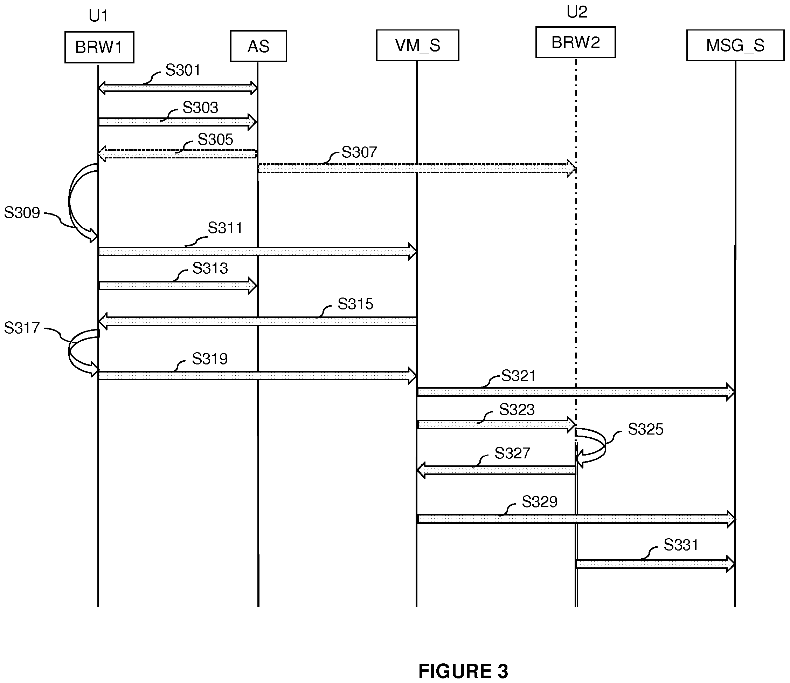

La **figure 3** est un diagramme représentant les échanges entre les différentes entités représentées à la figure 1 selon un exemple de mise en oeuvre d'un procédé de communication selon l'invention.

Comme représenté à la figure 3, les échanges ont lieu entre les différentes entités exposées en relation avec la figure 1 : les deux navigateurs BRW1, BRW2, le serveur d'application AS, le serveur de messagerie VM_S, et le serveur de stockage de messages MSG_S. La ligne verticale correspondant au navigateur BRW2 est représentée initialement en pointillé indiquant que le navigateur BRW2 n'est pas actif vis-à-vis de service de communication RTC fourni par le serveur AS - soit que le navigateur n'est pas connecté au serveur AS, soit qu'il n'est pas ouvert dans le terminal associé, soit que le terminal lui-même n'est pas connecté au réseau NW.

Selon le premier mode de réalisation introduit plus haut dans la description, les fonctionnalités de détermination d'un temps écoulé depuis l'envoi d'une demande d'établissement d'appel et de redirection automatique vers une messagerie vocale, lorsque le temps écoulé atteint une durée déterminée, sont mises en oeuvre par l'application web chargée dans un navigateur avec la page web fournie par le serveur d'application AS.

En pratique l'application web (APP, figure 1) est une application Javascript, et celle-ci peut être enrichie dans ce mode de réalisation d'une fonction du type défini par le pseudo code suivant, donné à titre d'exemple :

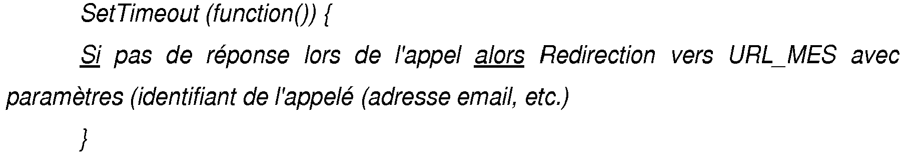

Ainsi dans ce mode de réalisation si, suite au déclenchement de l'appel, il s'écoule une durée (définie par la fonction SetTimeout) sans réponse de l'appelé, alors une redirection du navigateur est automatiquement effectuée vers l'adresse URL_MES de la messagerie, avec en paramètre en particulier l'identifiant de l'appelé utilisé lors de l'appel, par exemple une adresse de courrier électronique (*email*).

Selon le mode de réalisation choisi, d'autres informations peuvent être jointes en paramètres lors de l'opération de redirection, par exemple le type de terminal utilisé par l'utilisateur appelant (U1).

Selon le second mode de réalisation introduit plus haut dans la description, la détermination d'un temps écoulé depuis l'envoi d'une demande d'établissement d'appel, et de redirection automatique vers une messagerie vocale, sont mises en oeuvre par une interface de programmation (API) incorporée nativement dans les navigateurs. En pratique, les nouvelles fonctionnalités apportées par la présente invention sont implémentées dans l'interface API *RTCPeerConnection.*

Plus précisément, selon les spécifications WebRTC/RTCWEB, lors de l'établissement d'une communication WebRTC entre deux navigateurs, il se produit un échange de messages selon un modèle d'offre /réponse (*offer*/*answer*) dans le cadre du protocole SDP (*Session Description Protocol*).

Dans ce contexte, selon le second mode de réalisation, on prévoit de modifier l'interface API *RTCPeerConnection,* en y introduisant une nouvelle fonction, désignée dans cet exemple par *"SetRedirectionMevo(noanswer)"* (en gras ci-après), de redirection vers une messagerie en cas de non réponse du navigateur appelé, et cela avec récupération de l'identifiant de l'appelé, et le cas échéant, d'autres informations, pour permettre le dépôt de messages sur sa messagerie :

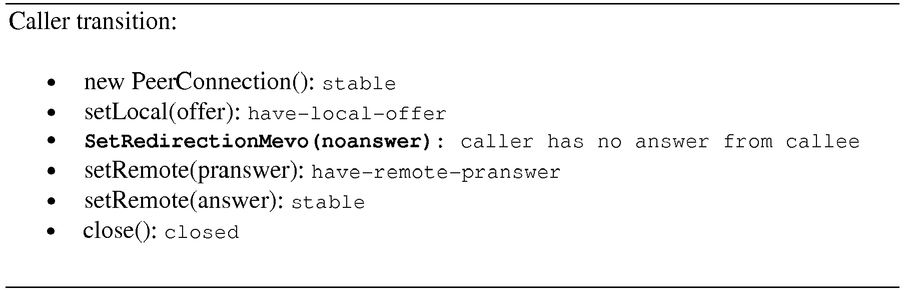

Pour obtenir plus d'informations concernant l'interface *RTCPeerConnection,* on pourra consulter le document : WebRTC 1.0: Real-time Communication Between Browsers - W3C Editor's Draft 22 March 2013 ; à l'adresse web suivante : http://dev.w3.ora/2011/webrtc/editor/webrtc.html#rtcpeerconnection-interface
(en particulier, voir section *4.4.1 RTCPeerState Enum*).

Dans ce mode de réalisation, les navigateurs BRW1 et BRW2 sont configurés au préalable par leur utilisateur, de sorte à paramétrer l'adresse de la messagerie vers laquelle rediriger le navigateur en cas de non réponse de l'appelé, ainsi que la durée sans réponse de l'appelé, à partir de laquelle la redirection doit être déclenchée.

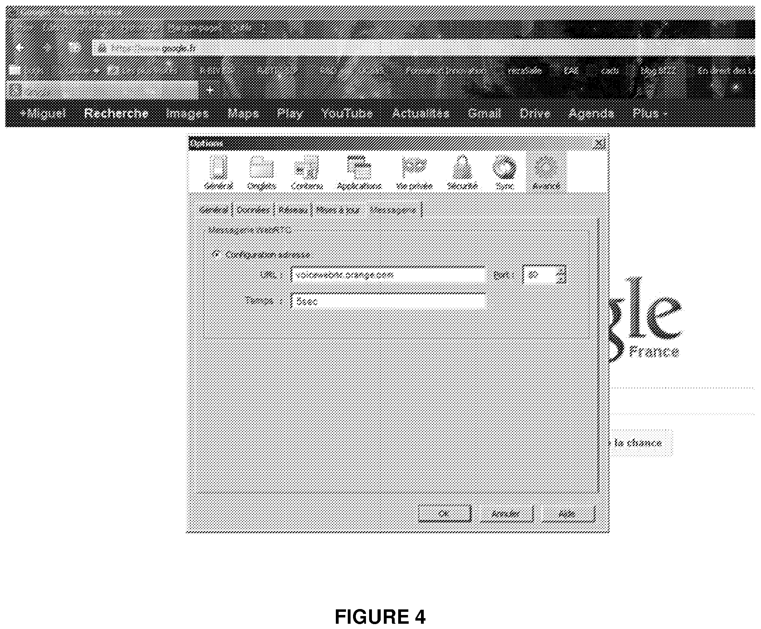

La configuration d'un navigateur selon ce mode de réalisation est illustrée par la **figure 4** qui représente une boîte de dialogue ouverte dans un navigateur, permettant de paramétrer l'adresse de renvoi vers une messagerie et le délai de temporisation avant renvoi. Sur la figure 4, on peut voir que l'adresse web (URL) de redirection est "voicewebrtc.orange.com" sur le port 80, et que le délai de temporisation est paramétré à 5 secondes.

De plus, chaque utilisateur ayant souscrit au service WebRTC selon l'invention a configuré au préalable sa messagerie personnelle, directement auprès du serveur de messagerie VM_S, ou indirectement, par l'intermédiaire du serveur d'application AS. Cette configuration préalable consiste notamment, d'une part, à enregistrer un ou plusieurs messages (vocal, vidéo et/ou textuel) destinés à être restitués en cas d'indisponibilité de l'utilisateur lors d'un appel entrant, et d'autre part, le cas échéant, à choisir un espace de stockage pour stocker en particulier les messages qui sont destinés à l'utilisateur en provenance d'autres utilisateurs du service WebRTC selon l'invention. Cet espace de stockage peut être hébergé directement par le serveur de messagerie VM_S, ou bien par un serveur de stockage dédié MSG_S, ou encore être un espace de stockage propre à l'utilisateur, souscrit auprès d'un autre fournisseur de service, tel que par exemple Dropbox™ de la société Dropbox, ou Le Cloud d'Orange™ de la société Orange. La configuration par l'utilisateur auprès de fournisseurs d'espaces de stockage distants est effectuée par l'intermédiaire d'interfaces API spécifiques fournis par ces fournisseurs.

De retour à la **figure 3****,** à l'étape S301, l'utilisateur U1 du navigateur BRW1 se connecte au service WebRTC selon l'invention, fourni par le serveur AS, selon une procédure propre au service lui-même, qui peut inclure une opération d'authentification de l'utilisateur. On peut envisager une procédure de connexion au serveur AS, du type de celle offerte par Facebook® avec les APIs Facebook Connect. Cette étape inclut le chargement par le navigateur de la page web contenant l'application Javascript du service WebRTC.

Ensuite (étape S303), l'utilisateur U1 déclenche via son navigateur un appel (par exemple vidéo) à destination de l'utilisateur U2 du navigateur BRW2, et reçoit en retour (étape S305) un message textuel dans son navigateur lui indiquant que l'appel est en cours. En parallèle, le serveur AS essaie de joindre le navigateur BRW2 pour lui transmettre la demande d'appel (étape S307), le navigateur BRW2 étant alors inactif (ligne en pointillé).

Dans le premier navigateur BRW1, l'envoi de la demande d'établissement déclenche l'étape de temporisation S309 conforme à l'invention. Le temps d'attente étant écoulé sans que l'appel soit établi avec le navigateur BRW2, lors de l'étape S311, le navigateur BRW1 est automatiquement redirigé, conformément à l'invention, vers le serveur de messagerie VM_S. Par ailleurs, le navigateur BRW1 transmet au serveur AS une commande de coupure de l'appel en cours (étape S313).

A l'étape S315, le navigateur BRW1 charge, à partir du serveur de messagerie VM_S, la page web affichant le "répondeur" de l'utilisateur U2 destinataire de l'appel non abouti, et restitue automatiquement le message d'indisponibilité de cet utilisateur (message vidéo par exemple).

Suite à la restitution du message d'indisponibilité de l'utilisateur U2, au cours de l'étape S317, l'utilisateur U1 enregistre un message à l'attention de l'utilisateur U2 (un message vocal par exemple). L'étape S317 utilise en particulier, selon le mode de réalisation choisi, l'API *MediaStream* (encore désignée par *getUserMedia*) du navigateur BRW1, ou bien une fonction de l'application web (Javascript) contenue dans la page web fournie par le serveur de messagerie VM_S, par exemple une primitive WebRTC désignée par *RecordRTC.*

A l'étape suivante S319, le message enregistré par l'utilisateur U1 est transmis au serveur de messagerie VM_S. Ce dernier, transmet alors ce message (étape S321) au serveur de stockage de messages MSG_S.

Ensuite à l'étape S323, le serveur de messagerie consulte les données de configuration de la messagerie de l'utilisateur U2, et détermine un identifiant de l'utilisateur U2 (ou d'un terminal, par exemple une adresse IP), et un format de notification, afin de transmettre à l'utilisateur U2 une notification l'informant de l'arrivée d'un nouveau message. Dans cet exemple l'identifiant est une adresse email, et lorsque l'utilisateur U2 se connectera (étape S325) au réseau NW avec son terminal (un PC par exemple) il pourra alors consulter sa messagerie électronique et prend connaissance du message de notification.

A l'étape S327, l'utilisateur U2 se connecte via le navigateur BRW2 - par exemple en cliquant sur un lien URL présent dans le message de notification - au serveur de messagerie VM_S, et prend connaissance du nouveau message. Le serveur VM_S, à partir d'un identifiant de l'utilisateur U2, met à jour, en se connectant (étape S329) au serveur de stockage MSG_S, une interface graphique de messagerie associée à l'utilisateur U2 avec les liens (URL) d'accès aux nouveaux messages.

Enfin, à l'étape S331, l'utilisateur U2 via l'interface de messagerie affichée par son navigateur (BRW2) peut en cliquant sur les liens correspondants déclencher la restitution en mode streaming des nouveaux messages, et en particulier celle du message déposé par l'utilisateur U1.

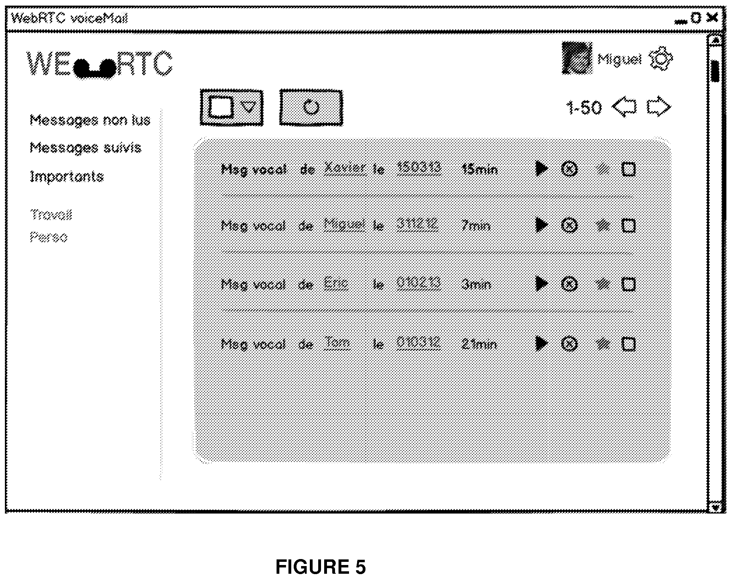

On donne en référence aux figures 5 à 7, des exemples d'interfaces graphiques obtenues par connexion d'un navigateur web à un serveur de messagerie WebRTC selon l'invention.

La **figure 5** représente un exemple d'interface graphique obtenue par un navigateur d'un utilisateur après connexion à un serveur de messagerie WebRTC selon l'invention, permettant à l'utilisateur de consulter les messages qu'il a reçus. Dans cet exemple, seuls des messages vocaux sont représentés.

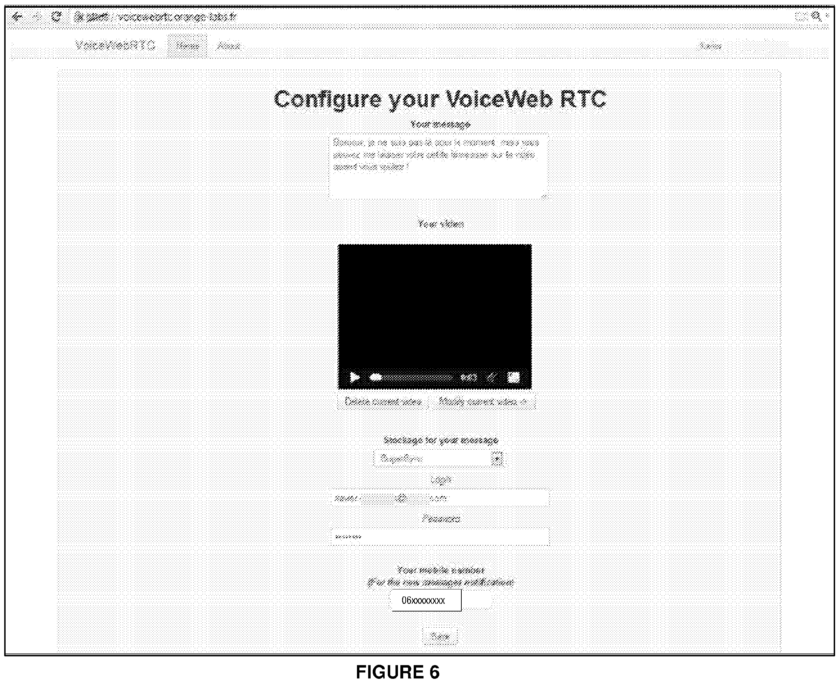

La **figure 6** représente un exemple d'interface graphique obtenue par un navigateur d'un utilisateur après connexion à un serveur de messagerie WebRTC selon l'invention, afin de permettre à l'utilisateur de configurer sa messagerie personnelle. Dans cet exemple, seul un message textuel de réponse a été configuré par l'utilisateur.

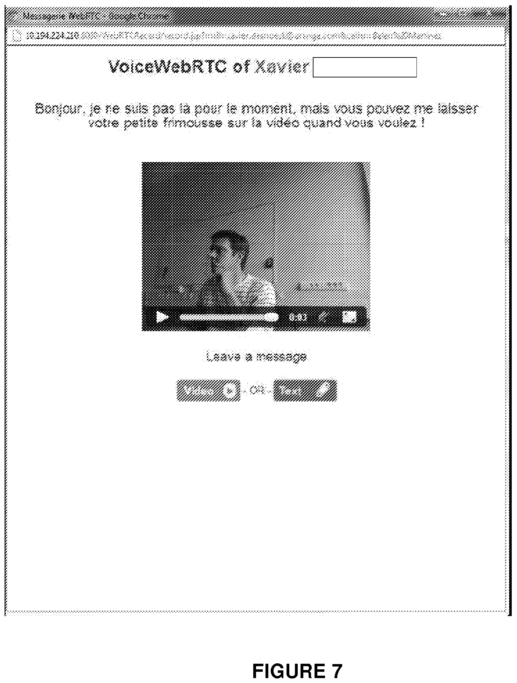

La **figure 7** représente un exemple d'interface, exemple d'interface graphique obtenue par un navigateur d'un premier utilisateur après redirection vers un serveur de messagerie WebRTC selon l'invention, suite à l'absence de réponse à un appel à destination d'un second utilisateur.

Sur l'interface représentée, on peut voit le message textuel d'absence du second utilisateur : "*Bonjour (...) vidéo quand vous voulez*" ; ainsi que, en dessous, la fenêtre affichant la vidéo en cours d'enregistrement qui correspond au message déposé par le premier utilisateur.

## Revendications

1. **Procédé** de communication en temps réel selon une technologie de type WebRTC, entre navigateurs web sur un réseau de communication de type Internet, comprenant :
- le chargement (S20) préalable par un premier navigateur web d'un premier terminal associé à un premier utilisateur, d'une application web fournie par un serveur d'application, ladite application web fournissant des fonctionnalités de communication temps réel entre navigateurs web ;
- l'envoi (S21) par le premier navigateur, via ladite application web, à destination du serveur d'application, d'une demande d'établissement d'appel incluant un identifiant d'un utilisateur destinataire de l'appel, dit second utilisateur ;
ledit procédé étant **caractérisé en ce qu'**il comporte en outre les étapes suivantes :
- détermination (S22, S23, S24) d'un état de disponibilité du second utilisateur pour répondre à la demande d'établissement d'appel ;
- redirection automatique (S25) vers une adresse web d'un service de messagerie associé audit second utilisateur, lorsque le second utilisateur est dans l'état indisponible.

2. Procédé selon la revendication 1, dans lequel l'étape de détermination d'un état de disponibilité du second utilisateur, inclut l'évaluation (S23, S24) d'un temps écoulé depuis l'envoi de la demande d'établissement d'appel, et l'état de disponibilité du second utilisateur est alors déterminé comme étant indisponible, lorsque le temps écoulé atteint une durée déterminée.

3. Procédé selon la revendication 1 ou 2, dans lequel l'étape de détermination d'un état de disponibilité du second utilisateur, inclut l'obtention (S22) d'une information de présence du second utilisateur pour le service de communication temps réel entre navigateurs , et si la dite information de présence indique que le second utilisateur est absent pour ledit service, alors l'état de disponibilité du second utilisateur est déterminé comme étant indisponible.

4. Procédé selon l'une quelconque des revendications 1 à 3, dans lequel, suite à la redirection vers ledit service de messagerie, le premier navigateur affiche une page web restituant un message du second utilisateur.

5. Procédé selon la revendication 4, dans lequel le message restitué du second utilisateur est un message de type audio, vidéo, et/ou textuel.

6. Procédé selon la revendication 4 ou 5, dans lequel ladite page web affichée dans le premier navigateur offre au premier utilisateur une fonctionnalité de dépôt (S27) d'un message destiné au second utilisateur.

7. Procédé selon la revendication 6, dans lequel un message déposé par le premier utilisateur est un message de type audio, vidéo, et/ou textuel.

8. Procédé selon la revendication 6 ou 7, dans lequel suite au dépôt d'un message par le premier utilisateur, le message déposé est transmis par le premier navigateur à un serveur de messagerie, ledit serveur de messagerie transmettant (S28) ensuite à destination d'un terminal associé audit second utilisateur, une notification indicative de la réception du message déposé par le premier utilisateur.

9. Procédé selon la revendication 8, dans lequel ladite notification comporte un message de type SMS ou MMS transmis à un identifiant de téléphonie mobile associé au second utilisateur.

10. Procédé selon la revendication 8 ou 9, dans lequel ladite notification comporte un message électronique transmis à une adresse de courrier électronique du second utilisateur.

11. Procédé selon la revendication 2, dans lequel lesdites étapes de détermination d'un temps écoulé depuis l'envoi d'une demande d'établissement d'appel, et de redirection automatique vers une messagerie vocale, lorsque le temps écoulé atteint une durée déterminée, sont mises en oeuvre par ladite application web chargée dans le premier navigateur.

12. Procédé selon la revendication 2, dans lequel lesdites étapes de détermination d'un temps écoulé depuis l'envoi d'une demande d'établissement d'appel, et de redirection automatique vers une messagerie vocale, sont mises en oeuvre par une interface de programmation, API, incorporée nativement dans le premier navigateur.

13. **Application web** fournissant des fonctionnalités de communication temps réel entre navigateurs web, **caractérisée** en qu'elle comprend des instructions de programme dont l'exécution par un processeur, déclenchée par un navigateur web d'un terminal de communication, provoque la mise en oeuvre des étapes de détermination d'un temps écoulé depuis l'envoi d'une demande d'établissement d'appel, et de redirection vers une messagerie vocale lorsque le temps écoulé atteint une durée déterminée, selon un procédé de communication selon l'une quelconque des revendications 1 à 12.

14. **Navigateur web caractérisé en ce qu'**il comporte une interface de programmation, API, incluant un code de programme d'ordinateur, dont l'exécution par un processeur d'un terminal de communication dans lequel le navigateur web est installé, provoque la mise en oeuvre des étapes de détermination d'un temps écoulé depuis l'envoi d'une demande d'établissement d'appel, et de redirection vers une messagerie vocale lorsque le temps écoulé atteint une durée déterminée, selon un procédé de communication conforme à l'une quelconque des revendications 1 à 12.

15. **Serveur d'application** fournissant un service de communication temps réel entre navigateurs web, **caractérisé en ce qu'**il inclut un serveur web hébergeant au moins une page web incluant une application web selon la revendication 13.

16. Serveur d'application selon la revendication 15, incluant un serveur de messagerie associé au second utilisateur.

## Patentansprüche

1. Verfahren zur Echtzeitkommunikation, gemäß einer Technologie des Typs WebRTC, zwischen Webbrowsern auf einem Kommunikationsnetz des Typs Internet, das enthält:
- das vorhergehende Laden (S20), durch einen ersten Webbrowser eines einem ersten Benutzer zugeordneten ersten Endgeräts, einer von einem Anwendungsserver gelieferten Webanwendung, wobei die Webanwendung Echtzeitkommunikationsfunktionen zwischen Webbrowsern liefert;
- das Senden (S21) durch den ersten Browser, über die Webanwendung, einer Rufaufbauanforderung an den Anwendungsserver, die eine Benutzeridentifizierung eines Benutzers enthält, für den der Ruf bestimmt ist, zweiter Benutzer genannt;
wobei das Verfahren **dadurch gekennzeichnet ist, dass** es außerdem die folgenden Schritte aufweist:
- Festlegen (S22, S23, S24) eines Verfügbarkeitszustands des zweiten Benutzers, um auf die Rufaufbauanforderung zu antworten;
- automatisches Umleiten (S25) zu einer Webadresse eines dem zweiten Benutzer zugeordneten Nachrichtenübermittlungsdiensts, wenn der zweite Benutzer im nicht verfügbaren Zustand ist.

2. Verfahren nach Anspruch 1, wobei der Schritt des Festlegens eines Verfügbarkeitszustands des zweiten Benutzers die Ermittlung (S23, S24) einer seit dem Senden der Rufaufbauanforderung vergangenen Zeit umfasst, und der Verfügbarkeitszustand des zweiten Benutzers dann als nicht verfügbar festgelegt wird, wenn die vergangene Zeit eine festgelegte Dauer erreicht.

3. Verfahren nach Anspruch 1 oder 2, wobei der Schritt des Festlegens eines Verfügbarkeitszustands des zweiten Benutzers das Erhalten (S22) einer Anwesenheitsinformation des zweiten Benutzers für den Echtzeitkommunikationsdienst zwischen Browsern umfasst, und wenn die Anwesenheitsinformation anzeigt, dass der zweite Benutzer für den Dienst abwesend ist, der Verfügbarkeitszustand des zweiten Benutzers als nicht verfügbar festgelegt wird.

4. Verfahren nach einem der Ansprüche 1 bis 3, wobei der erste Browser nach der Umleitung zum Nachrichtenübermittlungsdienst eine Webseite anzeigt, die eine Nachricht des zweiten Benutzers rekonstruiert.

5. Verfahren nach Anspruch 4, wobei die rekonstruierte Nachricht des zweiten Benutzers eine Nachricht des Typs Audio, Video und/oder Text ist.

6. Verfahren nach Anspruch 4 oder 5, wobei die im ersten Browser angezeigte Webseite dem ersten Benutzer eine Funktion des Eingebens (S27) einer für den zweiten Benutzer bestimmten Nachricht anbietet.

7. Verfahren nach Anspruch 6, wobei eine vom ersten Benutzer eingegebene Nachricht eine Nachricht des Typs Audio, Video und/oder Text ist.

8. Verfahren nach Anspruch 6 oder 7, wobei nach der Eingabe einer Nachricht durch den ersten Benutzer die eingegebene Nachricht vom ersten Browser an einen Mailserver übertragen wird, wobei der Mailserver anschließend an ein dem zweiten Benutzer zugeordnetes Endgerät eine Benachrichtigung überträgt (S28), die den Empfang der vom ersten Benutzer eingegebenen Nachricht anzeigt.

9. Verfahren nach Anspruch 8, wobei die Benachrichtigung eine Nachricht des Typs SMS oder MMS aufweist, die an eine dem zweiten Benutzer zugeordnete Mobiltelefon-Benutzeridentifizierung übertragen wird.

10. Verfahren nach Anspruch 8 oder 9, wobei die Benachrichtigung eine elektronische Nachricht aufweist, die an eine elektronische Postadresse des zweiten Benutzers übertragen wird.

11. Verfahren nach Anspruch 2, wobei die Schritte des Festlegens einer seit dem Senden einer Rufaufbauanforderung vergangenen Zeit und des automatischen Umleitens zu einer Voicemail, wenn die vergangene Zeit eine festgelegte Dauer erreicht, durch die in den ersten Browser geladene Webanwendung durchgeführt werden.

12. Verfahren nach Anspruch 2, wobei die Schritte des Festlegens einer seit dem Senden einer Rufaufbauanforderung vergangenen Zeit und des automatischen Umleitens zu einer Voicemail von einer Programmierungsschnittstelle, API, durchgeführt werden, die nativ in den ersten Browser eingebaut ist.

13. Webanwendung, die Echtzeitkommunikationsfunktionen zwischen Webbrowsern liefert, **dadurch gekennzeichnet, dass** sie Programmanweisungen enthält, deren Ausführung durch einen Prozessor, die von einem Webbrowser eines Kommunikationsendgeräts ausgelöst wird, die Durchführung der Schritte des Festlegens einer seit dem Senden einer Rufaufbauanforderung vergangenen Zeit und des Umleitens zu einer Voicemail, wenn die vergangene Zeit eine festgelegte Dauer erreicht, gemäß einem Kommunikationsverfahren nach einem der Ansprüche 1 bis 12 bewirkt.

14. Webbrowser **dadurch gekennzeichnet, dass** er eine Programmierungsschnittstelle, API, aufweist, die einen Computerprogrammcode umfasst, dessen Ausführung durch einen Prozessor eines Kommunikationsendgeräts, in das der Webbrowser eingebaut ist, die Durchführung der Schritte des Festlegens einer seit dem Senden der Rufaufbauanforderung vergangenen Zeit und des Umleitens zu einer Voicemail bewirkt, wenn die vergangene Zeit eine festgelegte Dauer erreicht, gemäß einem Kommunikationsverfahren nach einem der Ansprüche 1 bis 12.

15. Anwendungsserver, der einen Echtzeitkommunikationsdienst zwischen Webbrowsern liefert, **dadurch gekennzeichnet, dass** er einen Webserver umfasst, der mindestens eine Webseite hostet, die eine Webanwendung nach Anspruch 13 umfasst.

16. Anwendungsserver nach Anspruch 15, der einen dem zweiten Benutzer zugeordneten Mailserver umfasst.

## Claims

1. **Method** for real-time communication, using a technology of WebRTC type, between web browsers on a communication network of Internet type, comprising:
- preliminary loading (S20), by a first web browser of a first terminal associated with a first user, of a web application provided by an application server, said web application providing functionalities for real-time communication between web browsers;
- sending (S21), by the first browser, via said web application, to the application server, of a call setup request including an identifier of a user intended to receive the call, termed second user; said method being **characterized in that** it
furthermore includes the following steps:
- determining (S22, S23, S24) a state of availability of the second user to respond to the call setup request;
- automatic redirection (S25) to a web address of a mail service associated with said second user when the second user is in the unavailable state.

2. Method according to Claim 1, wherein the step of determining a state of availability of the second user includes the evaluation (S23, S24) of an elapsed time since the sending of the call setup request, and the state of availability of the second user is then determined as being unavailable when the elapsed time reaches a determined duration.

3. Method according to Claim 1 or 2, wherein the step of determining a state of availability of the second user includes the acquisition (S22) of an item of information on the presence of the second user for the service for real-time communication between browsers, and if said item of presence information indicates that the second user is absent for said service, then the state of availability of the second user is determined as being unavailable.

4. Method according to any one of Claims 1 to 3, wherein, following the redirection to said mail service, the first browser displays a web page presenting a message from the second user.

5. Method according to Claim 4, wherein the presented message from the second user is a message of audio, video and/or text type.

6. Method according to Claim 4 or 5, wherein said web page displayed in the first browser offers the first user a functionality to leave (S27) a message intended for the second user.

7. Method according to Claim 6, wherein a message left by the first user is a message of audio, video and/or text type.

8. Method according to Claim 6 or 7, wherein, following the leaving of a message by the first user, the left message is transmitted by the first browser to a mail server, said mail server then transmitting (S28), to a terminal associated with said second user, a notification indicating the reception of the message left by the first user.

9. Method according to Claim 8, wherein said notification includes a message of SMS or MMS type, transmitted to a mobile telephony identifier associated with the second user.

10. Method according to Claim 8 or 9, wherein said notification includes an electronic message transmitted to an electronic mail address of the second user.

11. Method according to Claim 2, wherein said steps of determining an elapsed time since the sending of a call setup request and of automatic redirection to a voicemail service, when the elapsed time reaches a determined duration, are implemented by said web application loaded in the first browser.

12. Method according to Claim 2, wherein said steps of determining an elapsed time since the sending of a call setup request and of automatic redirection to a voicemail service are implemented by a programming interface, API, incorporated natively into the first browser.

13. **Web application** providing functionalities for real-time communication between web browsers, **characterized in that** it comprises program instructions the execution of which by a processor, triggered by a web browser of a communication terminal, brings about the implementation of the steps of determining an elapsed time since the sending of a call setup request and of redirection to a voicemail service when the elapsed time reaches a determined duration, in accordance with a communication method according to any one of Claims 1 to 12.

14. **Web browser, characterized in that** it includes a programming interface, API, including a computer program code the execution of which by a processor of a communication terminal in which the web browser is installed brings about the implementation of the steps of determining an elapsed time since the sending of a call setup request and of redirection to a voicemail service when the elapsed time reaches a determined duration, in accordance with a communication method according to any one of Claims 1 to 12.

15. **Application server** providing a service for real-time communication between web browsers, **characterized in that** it includes a web server hosting at least one web page including a web application according to Claim 13.

16. Application server according to Claim 15, including a mail server associated with the second user.
